# EUROPÄISCHE PATENTSCHRIFT

(11) **EP 0 286 668 B1**
(45) Veröffentlichungstag und Bekanntmachung des Hinweises auf die Patenterteilung: **04.08.1993**
(21) Anmeldenummer: 87906732.0
(22) Anmeldetag: 14.10.1987
(51) Int. Cl.: B27G 19/08, B23D 59/02, B26D 7/08

(54) **VERFAHREN UND VORRICHTUNG ZUM TRENNEN ODER SCHLITZEN EINES STARREN SCHNITTGUTS, INSBESONDERE HOLZ**
PROCESS AND DEVICE FOR CLEAVING OR SLITTING A RIGID SAWN ARTICLE, IN PARTICULAR WOOD
PROCEDE ET DISPOSITIF POUR FENDRE OU REFENDRE UN PRODUIT DE SCIAGE RIGIDE, NOTAMMENT DU BOIS

(30) Priorität: 17.10.1986 DE 3635318; 20.06.1987 DE 3720500
(43) Veröffentlichungstag der Anmeldung: 19.10.1988
(73) Patentinhaber: Wurster u. Dietz GmbH u. Co. Maschinenfabrik, D-72072 Tübingen (DE)
(72) Erfinder: DIETZ, Hans, D-7403 Ammerbuch-Pfäffingen (DE)
(74) Vertreter: Witte, Alexander, Dr.-Ing.
(86) Internationale Anmeldenummer: DE8700466
(87) Internationale Veröffentlichungsnummer: WO8802683

(56) Entgegenhaltungen:
- EP-A- 0 169 399
- GB-A- 550 414
- US-A- 1 952 136
- US-A- 3 448 780
- US-A- 3 583 450
- US-A- 3 623 520
- US-A- 3 884 422
- US-A- 4 210 051

## Beschreibung

Die Erfindung bezieht sich auf ein Verfahren und eine Vorrichtung zum Trennen oder Schlitzen eines starren Schnittguts, insbesondere Holz, mit einem Elastizitätsmodul von vorzugsweise etwa 50.000 bis 400.000 kg/cm², bei dem bzw. der ein schmales, spanabhebende Elemente aufweisendes Werkzeug, insbesondere ein Kreissägeblatt, bei einer Schnittgeschwindigkeit von mehr als etwa 40 m/s einen Spalt endlicher Breite im Schnittgut anbringt, und ein Profilholz nach dem Passieren der spanabhebenden Elemente aus der Spaltebene heraus vom Rest des Schnittguts abgebogen wird.

Ein Verfahren und eine Vorrichtung der vorstehend genannten Art sind aus dem DE-U-85 34 533 bekannt.

Es ist bekannt, daß Kreissägeblätter im Rahmen ihres Einsatzes bei der Holzbearbeitung oder der Bearbeitung anderer Werkstoffe mit ähnlichem Elastizitätsmodul, die mit hohen Schnittgeschwindigkeiten bearbeitet werden können, einer hohen thermischen Beanspruchung im Bereich der Zähne ausgesetzt sind.

Bei bekanntgewordenen Zuschlägen zur Verminderung der Belastung der Zähne von Kreissägeblättern hat man jedoch das Augenmerk seither mehr auf die dynamische mechanische Belastung der Zähne gelegt. In den Zähnen treten nämlich beim Sägen erhebliche Druckspannungen dadurch auf, daß die Zähne beim Spanabheben auf das Schnittgut auftreffen. Es sind daher zahlreiche Vorschläge bekannt geworden, diese auftretende Druckspannungen durch Zugspannungen zu kompensieren, die durch eine besondere Formgestaltung des Kreissägeblatts, insbesondere das Vorsehen von Aussparungen im Kreissägeblatt, erzeugt werden. Ein Beispiel hierfür ist in der DE-A-31 31 122 zu finden.

Aus dem bereits eingangs genannten DE-U-85 34 533 ist eine Kreissäge mit Minimalschnittfuge bekannt, bei der im Zentrum eines Kreissägeblatts mit segmentspeichenförmiger Gestaltung ein Druckkraftgeber angeordnet ist, mit dem die einzelnen Segmente definiert beaufschlagt werden können. Das genannte Kreissägeblatt ist darüber hinaus im Bereich innerhalb der Sägezähne leicht konisch ausgebildet, so daß das die Zähne passiert habende Profilholz auf diese konische Schräge aufläuft und leicht aus der Spaltebene heraus abgebogen wird. Allerdings verbleibt das abgetrennte Profilholz im Eingriffsbereich des Kreissägeblatts, weil es auf dem konischen Bereich des Kreissägeblatts über eine beträchtliche Länge aufliegt. In diesem Auflagebereich entsteht jedoch eine erhebliche Reibung zwischen dem rotierenden konischen Bereich des Kreissägeblatts und dem abgebogenen Profilholz. Bei heute üblichen Vorschubgeschwindigkeiten in der Holzbearbeitung einerseits und den ebenfalls üblichen Kreissägeblattdurchmessern andererseits kann die Verweilzeit des abgebogenen Profilholzes an der konischen Oberfläche des bekannten Kreissägeblatts durchaus im Bereich bis zu 1 Sekunde liegen. Dies führt jedoch zu einer erheblichen mechanischen Belastung des Kreissägeblatts und des Antriebs und zu einer erheblichen thermischen Belastung des Kreissägeblatts und des Holzes, die beide nach heutigen technischen Erkenntnissen nicht vernachlässigt werden können.

Aus der GB-A-550 414 sind ein Verfahren und eine Vorrichtung zum Schlitzen oder Spalten von Schuhsohlen aus Kreppgummi bekannt. Die Schuhsohle soll dabei an der Spitze in Längsrichtung auf einer Länge von einigen Zentimetern geschlitzt werden, damit die obere Hälfte des geschlitzten Abschnittes gegen die Brandsohle der Schuhe geleimt und anschließend die untere Hälfte des geschlitzten Abschnittes mit der Brandsohle vernäht werden kann.

Bei der bekannten Vorrichtung wird eine rotierende Schneidscheibe verwendet, die an ihrem Umfang mit abgeschrägten Schneidzähnen versehen ist. Die Schneidscheibe hat einen Durchmesser von 10 Zentimetern, und es wird eine Schnittgeschwindigkeit von etwa 0,85 m/s eingestellt, um das Kreppgummi zu schneiden, wobei derartige Gummiwerkstoffe im allgemeinen einen Elastizitätsmodul in der Größenordnung von 30 kg/cm² aufweisen.

Bei der bekannten Vorrichtung wird die Schuhsohle flach auf einen Schlitten aufgelegt, der zugleich einen formschlüssigen seitlichen Halt für den hinteren Bereich der Schuhsohle bildet. Der Schlitten wird nun nach vorne geschoben, wobei das zu schlitzende bzw. zu spaltende vordere Ende der Schuhsohle etwa um die zu schlitzende Länge frei über den Schlitten vorsteht. Wegen der äußerst geringen Biegesteifigkeit des Kreppgummis ist auf der Unterseite der Vorrichtung ein Hubbolzen vorgesehen, der manuell mittels einer Wippe betätigbar ist, um das infolge der Schwerkraft möglicherweise nach unten durchhängende vordere Ende der Schuhsohle anzuheben. Auf diese Weise wird das vordere Ende dann zwischen zwei Rollen geführt, die sich quer zur Verschieberichtung des Schlittens befinden. Das vordere Ende der Schuhsohle trifft nun in radialer Richtung auf die Schneidscheibe und wird dort geschlitzt. Infolge der besonderen Formgebung der Schneidzähne am Umfang der Schneidscheibe entsteht dabei keine Spanabnahme.

Oberhalb und unterhalb der Schneidscheibe sind Abweisbleche angeordnet, die sich senkrecht zur Verschieberichtung der Schuhsohle erstrecken, wobei der Abstand der Abweisbleche zum Umfang der Schneidscheibe etwa 1 cm in radialer Richtung beträgt. Die aufgespaltenen Abschnitte der Schuhsohle laufen nach dem Passieren der Schneidzähne und des Abstandes zwischen den Schneidzähnen und der Abweisbleche auf diese Abweisbleche auf. Die fraglichen Abschnitte der Schuhsohle stehen damit noch über einen bestimmten Längenbereich in radialer Richtung der Schneidscheibe mit dieser in Reibkonkakt, ehe sie auf die Abweisbleche auflaufen, die in einfacher Weise als umgebogene Blechstreifen von im wesentlichen rechteckiger Form ausgebildet sind.

Der Erfindung liegt demgegenüber die Aufgabe zugrunde, ein Verfahren und eine Vorrichtung der eingangs genannten Art anzugeben, die es ermöglichen, starres Schnittgut, insbesondere Holz, mit einem Elastizitätsmodul von vorzugsweise etwa 50.000 bis 400.000 kg/cm² bei hohen Schnittgeschwindigkeiten von mehr als etwa 40 m/s ohne thermische Belastungen des verwendeten Werkzeugs zu trennen oder zu schlitzen.

Gemäß dem eingangs genannten Verfahren sowie der eingangs genannten Vorrichtung wird diese Aufgabe erfindungsgemäß dadurch gelöst, daß das Profilholz so abgebogen wird, daß es nach dem Verlassen der spanabhebenden Elemente einen Abstand vom Kreissägeblatt aufweist, wozu ein zum Abbiegen dienendes Trennelement in unmittelbarer Nähe neben dem Kreissägeblatt angeordnet ist und eine Oberfläche aufweist, die in der Nähe der Sägeblattachse vom Kreissägeblatt beabstandet ist und in der Nähe der Sägeblattzähne näherungsweise tangential zu einem durch die Sägeblattzähne gebildeten umlaufenden Rand verläuft.

Die der Erfindung zugrundeliegende Aufgabe wird auf diese Weise vollkommen gelöst. Im Idealfall kann man nämlich durch das Trennelement oder durch die Trennelemente erreichen, daß das Schnittgut nur noch mit den spanabhebenden Elementen, beispielsweise den Zähnen des Kreissägeblatts, in Berührung kommt, während eine seitliche Reibung zwischen den übrigen Bereichen des Werkzeugs und dem gesägten Spalt vermieden wird. Auf diese Weise wird die Reibung zwischen Werkzeug und Schnittgut drastisch reduziert und hierdurch die thermische Belastung des Werkzeugs vermindert.

Auf diese Weise ergibt sich der Vorteil, daß eine vorgegebene Schnittgenauigkeit auch über längere Standzeiten des Werkzeugs gewährleistet werden kann, und es vermindert sich selbstverständlich auch die Abnutzung des Werkzeugs, so daß auch wirtschaftliche Erfolge eintreten.

Bei einer bevorzugten Ausgestaltung der Erfindung wird das Schnittgut beidseitig des Werkzeugs abgebogen.

Diese Maßnahme hat den Vorteil, daß die Verminderung der Reibung besonders gut gelingt, weil nicht nur das abzutrennende Teil sondern auch das verbleibende Schnittgut außer Eingriff mit dem Werkzeug gebracht wird, sobald die Spanabnahme erfolgt ist.

Bei einer weiteren Ausgestaltung der Erfindung wird das Werkzeug während des Trennens mittels einer am Trennelement angeordneten Kühlvorrichtung gekühlt.

Diese Maßnahme hat den Vorteil, daß selbst die unvermeidliche Erwärmung im Bereich der spanabhebenden Elemente auf ein Minimum begrenzt werden kann, weil die erzeugte Wärme mittels der Kühlvorrichtung abgeführt wird.

Dies gilt insbesondere dann, wenn das Werkzeug im Bereich der spanabhebenden Elemente gekühlt wird, weil dann die Kühlwirkung dort einsetzt, wo die Wärme entsteht.

Bei Ausführungsformen der Erfindung wird ein zum Abbiegen dienendes Trennelement raumfest gehalten, es kann jedoch auch relativ zum Werkzeug bewegt, insbesondere in Vibrationen versetzt werden.

Diese Maßnahme hat den Vorteil, daß je nach Einsatzfall, insbesondere auch je nach Werkstoff des Schnittguts eine optimale Konfiguration gefunden werden kann, bei der ggf. auch Reibungswiderstände vermindert werden können, die dem Vorschub des Schnittguts entgegenstehen, wenn dies mittels des Trennelements seitlich aus der Spaltebene heraus abgebogen wird.

Bei einer weiteren Ausgestaltung der Erfindung wird mittels einer ersten Andrückeinrichtung unmittelbar vor den in Eingriff befindlichen spanabhebenden Elementen eine Kraft im wesentlichen senkrecht zur Spaltebene auf das ungespaltene Schnittgut ausgeübt.

Diese Maßnahme hat den Vorteil, daß ein sogenanntes "Vorspalten" verhindert wird, d.h. ein unkontrolliertes Vorauslaufen des Spalts vor der Trenn- oder Schnittfuge. Die Gefahr eines derartigen Vorspaltens ist naturgemäß umso größer, je größer der Winkel ist, unter dem das Trennelement das Schnittgut aus der Schneidebene heraus abbiegt. Um dem entgegenzuwirken, ist die erste Andrückeinrichtung vorgesehen, die entweder die Gefahr des Vorspaltens noch deutlich weiter vermindert oder es aber gestattet, größere Abbiegewinkel im Bereich des Trennelements vorzusehen.

Eine weitere bevorzugte Variante dieses Ausführungsbeispiels zeichnet sich dadurch aus, daß die Andrückeinrichtung einen Druckbalken aufweist, der mit einer kreisbogenförmigen Aufstandsfläche auf dem Schnittgut aufliegt.

Diese Maßnahme hat den Vorteil, daß das abgespaltene und abgebogene Profilholz nicht mehr und nicht weniger angedrückt wird, als dies gerade dem aktuellen Schnittverlauf entspricht.

Es kann daher die Andrückkraft optimal bemessen werden, so daß weder eine zu hohe Andrückkraft erforderlich ist, die zu einer unerwünschten hohen Entwicklung von Reibungswärme führen würde, noch eine zu niedrige Andrückkraft eingestellt wird, bei der die dem Trennschnitt vorauseilende Aufspaltung nicht mehr sicher vermieden werden könnte.

Bei einer weiteren bevorzugten Ausgestaltung der erfindungsgemäßen Vorrichtung erstreckt sich die Aufstandsfläche über einen Umfangswinkel, der im wesentlichen mit dem Eingriffsbereich der spanabhebenden Elemente am Schnittgut übereinstimmt.

Diese Maßnahme hat den Vorteil, daß das Kreissägeblatt im gesamten Bereich seines Eingriffs am Schnittgut den Andrückvorgang unterworfen wird, so daß über den gesamten Eingriffsbereich der Zähne des Kreissägeblatts die vorstehend geschilderten optimalen Verhältnisse eingestellt werden können.

Bei einer anderen Weiterbildung der erfindungsgemäßen Vorrichtung ist die Aufstandsfläche eben ausgebildet und geht entgegen einer Einlaufsrichtung des Schnittguts in eine Einlaufschräge über.

Diese Maßnahme hat den Vorteil, daß einerseits durch eine ebene Aufstandsfläche eine präzise Zumessung des Druckes beim Drücken eingestellt werden kann, andererseits stellt die Einlaufschräge sicher, daß das Schnittgut sich ruckfrei in die Schneid/Andrückebene hinein bewegen kann.

Besonders bevorzugt ist, wenn ein einer Einlaufrichtung des Schnittguts entgegengerichteter Rand der Aufstandsfläche, beispielsweise der Rand zwischen Aufstandsfläche und Einlaufschräge, zwischen einem Flugkreis und einem Grundkreis der spanabhebenden Elemente positioniert ist.

Diese Positionierung des Andrückelements hat sich in praktischen Versuchen als besonders vorteilhaft erwiesen, weil es dort mit geringstmöglicher Andrückkraft gelungen ist, ein Aufspalten des Schnittguts zu verhindern.

Besonders bevorzugt hat sich ferner, wenn die Aufstandsfläche eine radiale Breite aufweist, die zwischen der Hälfte und einem Zwanzigstel der Differenz der Radien eines Flugkreises und eines Grundkreises der spanabhebenden Elemente beträgt.

Auch diese Dimensionierung hat sich in praktischen Versuchen als besonders vorteilhaft erwiesen, weil die verhältnismäßig schmale Ausbildung der Aufstandsfläche bereits die gewünschten optimalen Ergebnisse erbringt.

Bei einer weiteren Ausgestaltung der Erfindung wird bei nur auf einer Seite der Spaltebene vorgesehenem Trennelement auf der jeweils anderen Seite mittels einer zweiten Andrückeinrichtung eine Führung im wesentlichen senkrecht zur Spaltebene auf das Werkzeug ausgeübt.

Diese Maßnahme hat den Vorteil, daß eine optimale Schnittgenauigkeit gewährleistet werden kann, weil das Werkzeug, insbesondere das Kreissägeblatt, stets in exakt radialer Richtung zur Dreh- bzw. Bewegungsachse des Werkzeugs gehalten werden kann.

Bei einer weiteren Ausgestaltung der Erfindung wird das Werkzeug in seiner Lage relativ zum Trennelement mittels eines auf das Werkzeug strömenden fluiden Mediums eingestellt.

Diese Maßnahme hat den Vorteil, daß eine dynamische Werkzeugführung möglich ist, indem das Trennelement, insbesondere Kreissägeblatt, in radialer Richtung durch ein Fluid beaufschlagt wird, was eine feinfühlige und schnelle Nachstellung des Werkzeugs ermöglicht.

Bei weiteren bevorzugten Ausgestaltungen der erfindungsgemäßen Vorrichtung gehen die Zähne im Bereich des Zahngrundes in einen umlaufenden verdickten Rand über, an dem, von der Achse des Kreissägeblatts aus gesehen, der Rand des Trennelementes angrenzt.

Diese Maßnahme hat den Vorteil, daß einerseits der Rand des Trennelements relativ dick ausgebildet werden kann, was der mechanischen Stabilität zugute kommt, andererseits aber ein möglichst stetiger Übergang von den Zähnen zum Trennelement hin erfolgt, was der Vermeidung von Störkanten beim Vorschub des Schnittguts zugute kommt.

Bei einer anderen Ausgestaltung der erfindungsgemäßen Vorrichtung weist das Trennelement einen Kanal auf, der im Hohlraum zwischen Trennelement und Kreissägeblatt mündet.

Diese Maßnahme hat den Vorteil, daß zum einen eine Kühlung des Kreissägeblatts möglich ist, andererseits kann aber auch der Kanal dazu herangezogen werden, um durch Druckbeaufschlagung die bereits erläuterte dynamische Lageeinstellung des Kreissägeblatts zu erzielen.

Wenn bei einer Weiterbildung dieser Variante der Hohlraum mit einer radialen Trennwand unterteilt ist, die im Bereich der Zähne einen Durchgang aufweist, so kann durch Einleiten eines Kühlmittels in den Hohlraum selektiv der Bereich der Zähne gekühlt werden, weil dort die kühle Kühlflüssigkeit den Durchgang durchströmt und unmittelbar auf den Bereich der Zähne gelangt.

Schließlich ist noch eine weitere Gruppe von Ausführungsbeispielen bevorzugt, bei denen das Trennelement in seiner profilierten Oberfläche einer mathematischen Biegelinie entsprechend ausgebildet ist, wobei die Biegelinie für verschiedene Einsatzfälle der Vorrichtung unterschiedlich dimensioniert sein kann und zwar zum einen für Weichholz (Fichte/Tanne) oder für Hartholz (Eiche/Buche) und zweckmäßigerweise von verhältnismäßig dicken Profilhölzern von beispielsweise bis 24mm oder mehr Stärke ausgegangen wird.

Diese Maßnahme hat den Vorteil, daß das Profilholz über die gesamte abgebogene Länge, während der es noch auf dem Trennelement aufliegt, gleichmäßig mechanisch belastet wird, so daß Überbeanspruchungen vermieden werden, die z.B. zu Faserrissen führen können.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Ansicht senkrecht zur Achse einer Kreissäge, teilweise im Schnitt und abgebrochen dargestellt;
- Fig. 2: eine schematisierte Schnittdarstellung einer weiteren Ausführungsform einer Kreissäge zur Erläuterung weiterer Einzelheiten der Erfindung;
- Fig. 3: eine Darstellung ähnlich Fig. 2, jedoch mit symmetrisch auf beiden Seiten eines Kreissägeblatts angeordneten Trennelementen;
- Fig. 4: eine Schnittdarstellung entlang der Linie IV-IV von Fig. 5 einer weiteren Ausführungsform einer erfindungsgemäßen Vorrichtung;
- Fig. 5: eine Seitenansicht der in Fig. 4 dargestellten Vorrichtung.

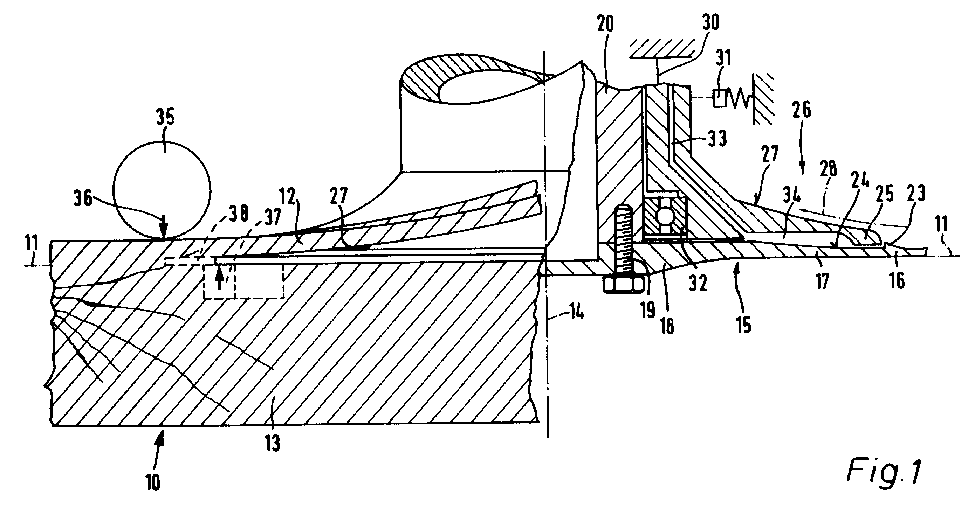

In Fig. 1 bezeichnet 10 insgesamt ein Schnittgut, das im Rahmen der vorliegenden Erfindung ein starres Schnittgut, insbesondere Holz, ist. Es sind jedoch auch andere Arten von Schnittgut, beispielsweise Kunststoffe im Rahmen der vorliegenden Erfindung verarbeitbar, sofern deren Elastizitätsmodul in einem Bereich von vorzugsweise etwa 50.000 bis 400.000 kg/cm² liegt. Es muß ferner hervorgehoben werden, daß im Rahmen der vorliegenden Erfindung nur von hohen Schnittgeschwindigkeiten von vorzugsweise mehr als etwa 40m/s, typischerweise 50 bis 200m/s, die Rede sein soll, und es handelt sich ausschließlich um spanabhebende Bearbeitungsverfahren, bei denen mittels eines Werkzeugs im Schnittgut zum Trennen oder Schlitzen des Schnittguts ein Spalt bzw. eine Fuge endlicher Breite erzeugt wird.

Bei dem in Fig. 1 dargestellten Beispiel soll das Schnittgut 10 in einer Trennebene 11 geteilt werden, im dargestellten Beispiel soll ein Profilholz 12 vom Rest 13 eines Rohholzes, beispielsweise eines Rundholzes oder eines anderen Profils abgetrennt werden.

Hierzu ist ein um eine Achse 14 drehbares Kreissägeblatt 15 vorgesehen, von dem in der rechten Hälfte von Fig. 1 beispielhaft ein Zahn 16 am Außenumfang des Kreissägeblatts 15 dargestellt ist. Das Kreissägeblatt 15 weist in der Nähe seiner Peripherie einen schmalen Bereich 17 und im Bereich der Achse 14 einen verdickten Bereich 18 zur Erhöhung der mechanischen Stabilität des Kreissägeblatts 15 auf. Mittels einer Schraube 19 ist das Kreissägeblatt 15 an eine in Fig. 1 nur schematisch angedeutete Welle 20 drehfest angeschraubt.

Die Zähne 16 des Kreissägeblatts 15 gehen in Richtung auf die Achse 14 in einen umlaufenden Rand 23 über, der zur Achse 14 hin eine Stufe aufweist, die in eine flache Oberfläche 24 des schmalen Bereichs 17 übergeht. An den umlaufenden Rand 23 schmiegt sich von innen ein umlaufender Rand 25 eines gesamthaft mit 26 bezeichneten Trennelements an. Das Trennelement 26 weist eine in radialer Richtung profilierte Oberfläche 27 auf, deren Abstand von der flachen Oberfläche 24 des Kreissägeblatts 15 zur Achse 14 hin zunimmt.

Durch die Konfiguration des umlaufenden Randes 23, des daran angepaßten Randes 25 des Trennelements 26 sowie durch die profilierte Oberfläche 27 ergibt sich insgesamt eine mögliche stetige Bewegungsbahn oberhalb des Kreissägeblatts 15 und des Trennelements 26, die in der rechten Hälfte von Fig. 1 mit einem Pfeil 28 angedeutet ist.

Durch eine schematisch angedeutete Verbindung 30 soll symbolisiert werden, daß das Trennelement 26 drehstarr und raumfest angeordnet ist, sich also mit dem Kreissägeblatt 15 nicht mitdreht. Es versteht sich jedoch, daß das Trennelement 26 keineswegs starr mit einem Maschinenrahmen verbunden sein muß, es ist vielmehr in Fig. 1 mit einem Feder-Masse-System 31 angedeutet, daß das Trennelement 26 auch selbst in Bewegungen, insbesondere Vibrationen versetzt werden kann, damit das Schnittgut auf der profilierten Oberfläche 27 möglichst reibungsarm entlanggleiten kann, wie dies noch erläutert werden wird.

Um das Trennelement 26 relativ zum Kreissägeblatt 15 zu lagern, ist ein Kugellager 32 oder eine entsprechende Drehverbindung vorgesehen.

Das Trennelement 26 ist ferner mit einem vorzugsweise axial verlaufenden Kanal 33 versehen, über den ein Fluid, beispielsweise eine Flüssigkeit oder ein Gas, in einen Hohlraum 34 zwischen dem Trennelement 26 und dem Kreissägeblatt 15 eingebracht werden kann. Dieses Fluid kann entweder dazu dienen, das Kreissägeblatt 15 zu kühlen, wie dies noch zu erläutern sein wird, das Fluid kann darüberhinaus aber auch verwendet werden, um durch Erzeugen eines Drucks im Hohlraum 34 eine axiale Kraft auf das Kreissägeblatt 15 auszuüben und damit seine radiale Ausrichtung in der Trennebene 11 nachzuregeln, wenn dies z.B. bei asymmetrischer Belastung des Kreissägeblatts 15 erforderlich sein sollte.

In der linken Hälfte von Fig. 1 ist mit 38 der vom Kreissägeblatt 15 im Schnittgut 10 erzeugte Spalt angedeutet. Man erkennt ferner, daß das vom Rest 13 des Schnittguts 10 abgetrennte Profilholz 12 seitlich aus der Trennebene 11 heraus abgebogen wird und zwar in dem Ausmaß, wie das Profilholz 12 in Richtung des Pfeiles 28 auf der profilierten Oberfläche 27 des Trennelements 26 gleitet.

Aufgrund des Umbiegens des Profilholzes 12 aus der Trennebene 11 heraus kann es vorkommen, daß sich vor dem Spalt 38 ein vorauslaufender, unkontrollierter Spalt bildet. Um dies zu verhindern, ist eine erste Andrückeinrichtung 35 seitlich vom Schnittgut 10 vorgesehen, die im Bereich des Umfangs des Kreissägeblatts 15 in Richtung des in Fig. 1 eingezeichneten Pfeils 36 in axialer Richtung auf das Schnittgut 10 drückt.

Bei der in Fig. 1 dargestellten Anordnung ist nur auf einer Seite des Sägeblatts 15 ein Trennelement 26 vorgesehen. Um ein Auswandern des Sägeblatts 15 auf die andere, in Fig. 1 untere Seite zu verhindern, ist eine zweite Andrückeinrichtung 37 vorgesehen, die außerhalb des Eingriffs des Kreissägeblatts 15 in das Schnittgut 10 eine ebenfalls im wesentlichen axial gerichtete Führungskraft auf das Kreissägeblatt 15 ausübt.

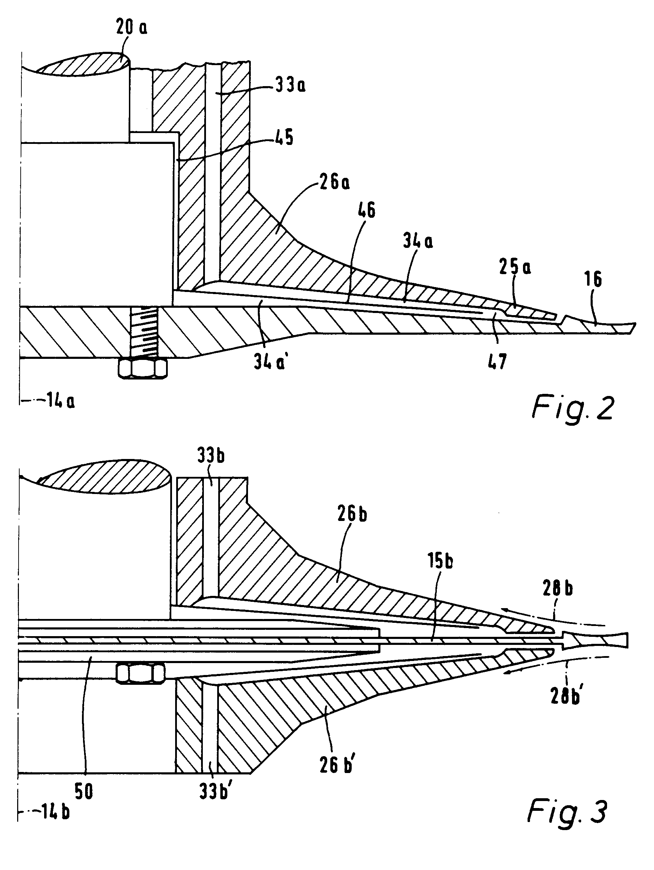

Bei der in Fig. 2 gezeigten Variante besteht eine Abweichung vom Ausführungsbeispiel gemäß Fig. 1 zum einen dadurch, daß zwischen Welle 20a und Trennelement 26a ein radialer Abstand 45 vorgesehen ist, um eine Mitnahme des Trennelements 26 durch die rotierende Welle 20a zu verhindern.

Der in Fig. 1 eingezeichnete Hohlraum 34 ist im Ausführungsbeispiel gemäß Fig. 2 mittels einer Trennwand 46 in zwei Hohlräume 34a, 34a 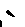 unterteilt. Die Trennwand 46 ist am Trennelement 26a in der Nähe der Achse 14a über den gesamten Umfang verbunden, während am äußeren Umfang der kreisringförmigen Trennwand 46 ein Durchgangsbereich 47 zwischen den Hohlräumen 34a bzw. 34a 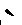 verbleibt. Der Bereich 47 befindet sich in der Nähe der Zähne 16 und des Randes 25a des Trennelements 26a. Wird nun über den Kanal 33a ein Kühlmedium in den oberhalb der Trennwand 46 befindlichen Teilhohlraum 34a eingeleitet, so strömt dieses Kühlmedium im Bereich 47 in den unteren Teilhohlraum 34a 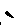 , was zur Folge hat, daß insbesondere die Zähne 16a unmittelbar gekühlt werden. Wird das durch den Kanal 33a geleitete Medium hingegen zum Auslenken des Kreissägeblatts 15 in axialer Richtung benutzt, so ergibt sich durch die Positionierung des Bereichs 47 die Wirkung, daß der Hebelarm, von der Achse 14a aus gesehen, besonders groß ist.

Das in Fig. 3 dargestellte Ausführungsbeispiel weicht von den bislang geschilderten Ausführungsbeispielen vor allem deswegen ab, weil beidseits des Kreissägeblatts 16b Trennelemente 26b, 26b 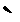 vorgesehen sind. Es ergeben sich damit, wie mit Pfeilen 28b, 28b 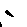 angedeutet, zwei symmetrisch zueinander liegende Bewegungsbahnen für das Schnittgut, das in diesem Falle beidseitig vom Kreissägeblatt 15b weg abgebogen wird.

Das Kreissägeblatt 15b gemäß Fig. 3 ist im übrigen ansonsten durchgehend flach ausgebildet und zur Achse 14b hin in einer üblichen Flanschhalterung 50 gehalten.

Durch ebenfalls symmetrisch angeordnete Kanäle 33b, 33b 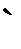 in den Trennelementen 26b, 26b 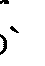 kann wieder ein Medium zugeführt werden, das zur Kühlung des Kreissägeblatts 15b, jetzt von beiden Seiten, oder aber auch zur dynamischen Lageregelung des Kreissägeblatts 15b verwendet werden kann. Die symmetrische Zuführung des Mediums hat bei der dynamischen Lageregelung den Vorteil, daß in besonders effektiver Weise eine Lageregelung des Kreissägeblatts 15b nach beiden axialen Richtungen hin möglich ist.

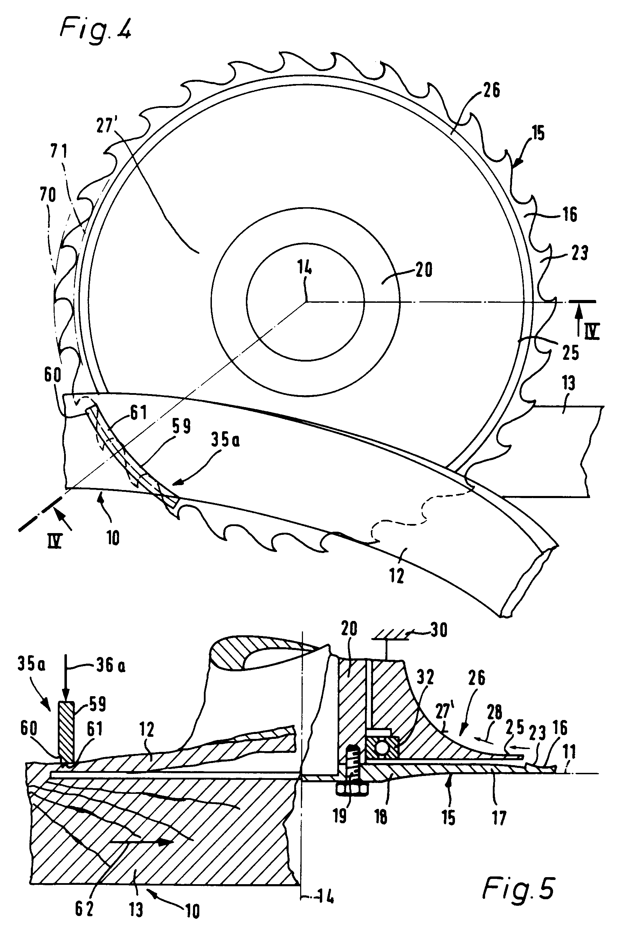

Beim Ausführungsbeispiel der Fig. 4 und 5 ist zusätzlich vorgesehen, daß die profilierte Oberfläche 27 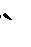 entsprechend einer mathematischen Biegelinie ausgebildet ist. Bekanntlich ist es möglich, mit den Regeln der Festigkeitslehre für einen einseitig eingespannten Balken bekannter Dicke und bekannten Elastizitätsmoduls für den Fall einer am freien Ende des eingespannten Balkens senkrecht zur Einspannrichtung angreifenden Kraft die Biegelinie, d.h. die Kontur des durchgebogenen Balkens, zu bestimmen.

Dies kann man sich zunutze machen, indem beispielsweise für den Fall einer Weichholzbearbeitung, typischerweise der Bearbeitung von Fichten- oder Tannenholz, die mathematische Biegelinie berechnet wird, wobei man hinsichtlich der Dicke des Balkens von einer großzügig bemessenen Dicke eines abzutrennenden Profilholzes in der Größenordnung von bis etwa 24 mm oder mehr ausgeht. Entsprechend kann man für einen anderen Anwendungsfall der Hartholzbearbeitung, typischerweise der Bearbeitung von Eichen-oder Buchenholz eine zweite Biegelinie unter Zugrundelegung beispielsweise derselben Balkendicke bestimmen und, ausgehend von diesen Vorgaben, zwei unterschiedliche Trennelemente 26 mit entsprechender profilierter Oberfläche 27 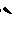 herstellen, die für die beiden genannten Anwendungsfälle optimiert sind. Das abgespaltene Profilholz wird dann entlang der Oberfläche des Trennelements 26 so geführt, wie es seiner natürlichen Biegelinie entspricht, oder bei dünnerem Profilholz noch weniger durchgebogen, so daß sich die Biegebelastung über die axiale Länge des Profilholzes gleichmäßig verteilt.

Eine weitere wesentliche Merkmalsgruppe des in Fig. 4 und 5 dargestellten Ausführungsbeispiels manifestiert sich in der Ausgestaltung einer Andrückeinrichtung 35a, die im Eingriffsbereich der Zähne 16 des Kreissägeblatts 15 am Schnittgut 10 wirksam ist.

Die Andrückeinrichtung 35a wird mit einer Andrückkraft geeigneter Größe senkrecht zur Ebene des Kreissägeblatts 15 auf die Oberfläche des Schnittguts 10 aufgedrückt, wie mit einem Pfeil 36a in Fig. 4 angedeutet. Hierzu können spezielle Andrückvorrichtungen, beispielweise hydraulische Kolben-Zylinder-Einheiten, vorgesehen sein, mit denen es auch möglich ist, die Andrückkraft nach vorgegebenen Verfahrensparametern zu variieren oder zu modulieren, um beispielsweise durch Überlagerung einer vibrierenden Bewegung den Andrückvorgang zu beeinflussen. Es ist aber üblicherweise ausreichend, die Andrückkraft dadurch zu erzeugen, daß man die Andrückeinrichtung 35 mit Untermaß zustellt, d.h., daß der Abstand zwischen Andrückeinrichtung 35a und der Oberfläche des Kreissägeblatts 15 geringer eingestellt wird, als dies der Dicke des abzutrennenden Profilholzes 12 entspricht.

Die in Fig. 4 und 5 dargestellte Andrückeinrichtung 35a weist einen Druckbalken 59 auf, der sich kreisbogenförmig über einen bestimmten Umfangswinkel erstreckt. In Fig. 5 ist am unteren Ende des Druckbalkens 59 gezeigt, daß dieser über die Breite des Schnittguts 10 überstehen kann, während am oberen Ende angedeutet ist, daß der Druckbalken 59 auch schmaler dimensioniert werden kann, je nachdem, wie dies im Einzelfall zweckmäßig ist. Üblicherweise wird man den Druckbalken 59, ähnlich dem in Fig. 5 dargestellten unteren Ende, so dimensionieren, daß er für Schnittgut 10 unterschiedlicher Breite eine ausreichende Umfangslänge aufweist, d.h. üblicherweise beidseits über das Schnittgut 10 übersteht.

Aus der Querschnittsdarstellung der Fig. 4 ergibt sich, daß der Druckbalken 59 an seiner Unterseite mit einer Einlaufschräge 60 sowie einer ebenen Aufstandsfläche 61 versehen ist, wobei die Einlaufschräge 60 entgegen einer Einlaufrichtung 62 des Schnittguts 10 weist. Dies bewirkt, daß das Schnittgut 10, ohne daß es zum Verhaken kommen kann, zunächst in den Bereich der Einlaufschräge 60 gelangt und von dort in den Bereich der Aufstandsfläche 61 geführt wird. Aus der Ansicht der Fig. 5 ergibt sich, daß die radiale Positionierung des Druckbalkens 59 relativ zur Oberfläche des Kreissägeblatts 15 zweckmäßigerweise so gewählt wird, daß die Aufstandsfläche 61 zwischen einem äußeren Flugkreis 70 und einem Zahn-Grundkreis 71 des Kreissägeblatts 15 angeordnet ist.

Bei einem typischen Ausführungsbeispiel der Erfindung betrage der Unterschied zwischen den Radien der Kreise 70 und 71, d.h. die Höhe der Zähne 16 etwa 20 mm. Die radiale Breite der Aufstandsfläche 61 liegt in diesem Fall zweckmäßigerweise zwischen 1 und 5 mm, wobei der Rand im Übergang von der Aufstandsfläche 61 zur Einlaufschräge 60 vorzugsweise mit dem Flugkreisradius 70 fluchtet oder gegenüber diesem um bis zu 20 mm radial nach innen versetzt ist. Abweichungen hiervon sind jedoch im Einzelfall möglich, je nachdem, welche Verfahrensbedingungen bestehen.

## Patentansprüche

1. Verfahren zum Trennen oder Schlitzen eines starren Schnittguts (10), insbesondere Holz, mit einem Elastizitätsmodul von vorzugsweise etwa 50.000 bis 400.000 kg/cm², bei dem ein schmales, spanabhebende Elemente aufweisendes Werkzeug, insbesondere ein Kreissägeblatt (15), bei einer Schnittgeschwindigkeit von mehr als etwa 40 m/s einen Spalt (38) endlicher Breite im Schnittgut (10) anbringt, und ein Profilholz (12) nach dem Passieren der spanabhebenden Elemente aus der Spaltebene (11) heraus vom Rest (13) des Schnittguts (10) abgebogen (28) wird, dadurch gekennzeichnet, daß das Profilholz (12) so abgebogen wird, daß es nach dem Verlassen der spanabhebenden Elemente stets einen Abstand vom Kreissägeblatt (15) aufweist, wozu ein zum Abbiegen dienendes Trennelement (26) in unmittelbarer Nähe neben dem Kreissägeblatt (15) angeordnet ist und eine Oberfläche (27) aufweist, die in der Nähe der Sägeblattachse (14) vom Kreissägeblatt (15) beabstandet ist und in der Nähe der Sägeblattzähne (16) näherungsweise tangential zu einem durch die Sägeblattzähne (16) gebildeten umlaufenden Rand (23) verläuft.

2. Verfahren nach Anspruch 1, dadurch gekennzeichnet, daß das Schnittgut (10) beidseits des Werkzeugs abgebogen (28b, 28b 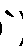 ) wird.

3. Verfahren nach Anspruch 1 oder 2, dadurch gekennzeichnet, daß das Werkzeug insbesondere im Bereich der spanabhebenden Elemente während des Trennens mittels einer am Trennelement (26) angeordneten Kühlvorrichtung gekühlt wird.

4. Verfahren nach einem oder mehreren der Ansprüche 1 bis 3, dadurch gekennzeichnet, daß das Trennelement (26) raumfest gehalten wird.

5. Verfahren nach einem oder mehreren der Ansprüche 1 bis 3, dadurch gekennzeichnet, daß das Trennelement (26) relativ zum Werkzeug bewegt wird.

6. Verfahren nach Anspruch 5, dadurch gekennzeichnet, daß das Trennelement (26) in Vibrationen versetzt wird.

7. Verfahren nach einem oder mehreren der Ansprüche 1 bis 6, dadurch gekennzeichnet, daß mittels einer ersten Andrückeinrichtung (35) unmittelbar vor oder nach den in Eingriff befindlichen spanabhebenden Elementen eine Kraft im wesentlichen senkrecht zur Spaltebene (11) auf das Schnittgut (10) ausgeübt wird.

8. Verfahren nach einem oder mehreren der Ansprüche 1 bis 7, dadurch gekennzeichnet, daß bei nur auf einer Seite der Spaltebene (11) vorgesehenem Trennelement (26) auf der jeweils anderen Seite mittels einer zweiten Andrückeinrichtung (37) eine Kraft im wesentlichen senkrecht zur Spaltebene (11) auf das Werkzeug ausgeübt wird.

9. Verfahren nach einem oder mehreren der Ansprüche 1 bis 8, dadurch gekennzeichnet, daß das Werkzeug in seiner Lage relativ zum Trennelement (26) mittels eines auf das Werkzeug strömenden fluiden Mediums eingestellt wird.

10. Vorrichtung zum Trennen oder Schlitzen eines starren Schnittguts (10), insbesondere Holz, mit einem Elastizitätsmodul von vorzugsweise etwa 50.000 bis 400.000 kg/cm², bei der ein schmales, spanabhebende Elemente aufweisendes Werkzeug, insbesondere ein Kreissägeblatt (15), bei einer Schnittgeschwindigkeit von mehr als etwa 40 m/s einen Spalt (38) endlicher Breite im Schnittgut (10) anbringt, und ein Profilholz (12) nach dem Passieren der spanabhebenden Elemente aus der Spaltebene (11) heraus vom Rest (13) des Schnittguts (10) abgebogen (28) wird, dadurch gekennzeichnet, daß das Profilholz (12) so abgebogen wird, daß es nach dem Verlassen der spanabhebenden Elemente stets einen Abstand vom Kreissägeblatt (15) aufweist, wozu ein zum Abbiegen dienendes Trennelement (26) in unmittelbarer Nähe neben dem Kreissägeblatt (15) angeordnet ist und eine Oberfläche (27) aufweist, die in der Nähe der Sägeblattachse (14) vom Kreissägeblatt (15) beabstandet ist und in der Nähe der Sägeblattzähne (16) näherungsweise tangential zu einem durch die Sägeblattzähne (16) gebildeten umlaufenden Rand (23) verläuft.

11. Vorrichtung nach Anspruch 10, dadurch gekennzeichnet, daß das Trennelement (26) einen Kanal (33) aufweist, der im Hohlraum (34) zwischen Trennelement (26) und Kreissägeblatt (15) mündet, wobei vorzugsweise der Hohlraum (34a, 34a 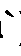 ) mit einer radialen Trennwand (46) unterteilt ist, die im Bereich (47) der Zähne (16) einen Durchgang aufweist.

12. Vorrichtung nach Anspruch 10 oder 11, dadurch gekennzeichnet, daß beidseits des Kreissägeblatts (15) Trennelemente (26b, 26b 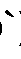 ) angeordnet sind.

13. Vorrichtung nach einem oder mehreren der Ansprüche 10 bis 12, dadurch gekennzeichnet, daß das Kreissägeblatt (15) zur Achse (10) hin verdickt (18) ausgebildet ist.

14. Vorrichtung nach einem oder mehreren der Ansprüche 10 bis 13, dadurch gekennzeichnet, daß eine erste, in Richtung der Achse (14) wirkende Andrückeinrichtung (35) für das Schnittgut (10) an dem oder außerhalb des Umfanges des Kreissägeblatts (15) vorgesehen ist.

15. Vorrichtung nach einem der Ansprüche 10 bis 14, dadurch gekennzeichnet, daß bei nur einseitig am Kreissägeblatt (15) vorgesehenem Trennelement (26) auf der jeweils anderen Seite des Kreissägeblatts (15) eine zweite, in Richtung der Achse (14) wirkende Andrückeinrichtung (37) für das Kreissägeblatt (15) vorgesehen ist.

16. Vorrichtung nach einem der Ansprüche 14 oder 15, dadurch gekennzeichnet, daß die Andrückeinrichtung (35a) einen Druckbalken (59) aufweist, der mit einer kreisbogenförmigen Aufstandsfläche (61) auf dem Schnittgut (10) aufliegt, wobei sich vorzugsweise die Aufstandsfläche (61) über einen Umfangswinkel erstreckt, der im wesentlichen mit dem Eingriffsbereich der spanabhebenden Elemente am Schnittgut (10) übereinstimmt, und insbesondere die Aufstandsfläche (61) eben ausgebildet ist und entgegen einer Einlaufrichtung (62) des Schnittguts (10) in eine Einlaufschräge (60) übergeht.

17. Vorrichtung nach Anspruch 16, dadurch gekennzeichnet, daß das Trennelement (26) in seiner profilierten Oberfläche (27 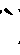 ) einer mathematischen Biegelinie entsprechend ausgebildet, insbesondere die Biegelinie auf ein Profilholz (12) aus Fichte/Tanne oder aus Eiche/Buche von 24 mm Dicke oder mehr ausgelegt ist.

## Claims

1. A method for cutting or slotting rigid material (10) to be cut, in particular wood, having a modulus of elasticity of, approximately, between 50,000 and 400,000 kg/cm², wherein a narrow tool bearing chip-removing elements, in particular a circular saw blade (15), applies a slot (38) of finite width to the material (10) to be cut at a cutting speed of more than approximately 40 m/s, and a timber section (12), after having passed by the chip-removing elements, is deflected away (28) from the slotting plane (11) and from the remaining (13) material (10) to be cut, characterized in that the timber section (12) is deflected such that it keeps a distance from the circular saw blade (15) at any time, wherein, for that purpose, a separating element (26) is located in direct vicinity adjacent the circular saw blade (15) and has a surface (27) being distant from the circular saw blade (15) in the vicinity of the saw blade axis (14) but extending, in the vicinity of the saw blade teeth (16), approximately tangentially to a circular rim (23) formed by the saw blade teeth (16).

2. The method of claim 1, characterized in that the material to be cut (10) is deflected (28b, 28b') on both sides of the tool.

3. The method of claim 1 or 2, characterized in that the tool is cooled, in particular in the area of the chip-removing elements, during cutting by means of a cooling system arranged at the separating element (26).

4. The method of any of claims 1 through 3, characterized in that the separating element (26) is held stationarily.

5. The method of any of claims 1 through 3, characterized in that the separating element (26) is displaced relative to the tool.

6. The method of claim 5, characterized in that the separating element (26) is set to vibrate.

7. The method of one or more of claims 1 through 6, characterized in that a force is exerted on the material (10) to be cut essentially in a direction perpendicular to the separating plane by means of a first pressing system (35) directly in front of or behind the chip-removing element engaging the material (10).

8. The method of one or more of claims 1 through 7, characterized in that the separating element (26) is provided only on one side of the slotting plane (11) whereas on the respective other side a force is exerted essentially in a perpendicular direction to the slotting plane (11) on the tool by means of a second pressing system (37).

9. The method of one or more of claims 1 through 8, characterized in that the tool is set in its position relative to the separating element (26) by means of a fluid flowing on the tool.

10. An apparatus for cutting or slotting a rigid material (10) to be cut, in particular wood, having a modulus of elasticity of, approximately, between 50,000 and 400,000 kg/cm², wherein a narrow tool bearing chip-removing elements, in particular a circular saw blade (15), applies a slot (38) of finite width to the material (10) to be cut at a cutting speed of more than approximately 40 m/s, and a timber section (12), after having passed by the chip-removing elements, is deflected away (28) from the slotting plane (11) and from the remaining (13) material (10) to be cut, characterized in that the timber section (12) is deflected such that it keeps a distance from the circular saw blade (15) at any time, wherein, for that purpose, a separating element (26) effecting the deflection is located in direct vicinity adjacent the circular saw blade (15) and has a surface (27) being distant from the circular saw blade (15) in the vicinity of the saw blade axis (14) but extending, in the vicinity of the saw blade teeth (16), approximately tangentially to a circular rim (23) formed by the saw blade teeth (16).

11. The apparatus of claim 10, characterized in that the separating element (26) is provided with a duct (33), terminating in the hollow cavity (34) between the separating element (26) and the circular saw blade (15), the hollow cavity (34a, 34a') being preferably subdivided by means of a radial separation wall (46) having a passage in the area (47) of the teeth (16).

12. The apparatus of claim 10 or 11, characterized in that separating elements (26b, 26b') are arranged on both sides of the circular saw blade (15).

13. The apparatus of one or more of claims 10 through 12, characterized in that the circular saw blade (15) is designed thicker (18) towards its axis (10).

14. The apparatus of one or more of claims 10 through 13, characterized in that a first pressing system (35) is provided, acting on the material (10) to be cut in the direction of the axis (14) and on the periphery or outside the periphery of the circular saw blade (15).

15. The apparatus of any of claims 10 through 14, characterized in that one separating element (26) only is provided on one side of the circular saw blade (15) whereas on the respective other side of the circular saw blade (15) a second pressing system (37) is provided acting on the circular saw blade (15) in the direction of the axis (14).

16. The apparatus of claim 14 or 15, characterized in that the pressing system (35a) is provided with a pressure beam (59) contacting the material (10) to be cut along a support surface (61) being shaped as a circular arc, the support surface (61) extending over a peripheral angle being essentially the same as that of the chip-removing elements' engaging section on the material (10) to be cut, and, in particular, the supporting surface (61) is of plane design and has a transition into an input inclination (60) opposite the entering direction (62) of the material (10) to be cut.

17. The apparatus of claim 16, characterized in that the separating element (26) in its profiled surface (27') is designed according to a mathematical deflection line, in particular the deflection line of a timber wood (12) from pine wood/fir wood or from oak wood/beech wood having 24 mm or more thickness.

## Revendications

1. Procédé pour sectionner ou fendre un produit de coupe (10) rigide, en particulier du bois, présentant un module d'élasticité compris de préférence entre 50 000 et 400 000 kg/cm² environ, pour lequel un outil étroit, comportant des éléments enlevant des copeaux, en particulier une lame de scie circulaire (15), pratique une fente (38), de largeur finie, dans le produit de coupe (10), à une vitesse de coupe supérieure à 40 m/s environ, et un bois profilé (12) est courbé (28) par rapport au reste (13) du produit de coupe (10), après que les éléments enlevant des copeaux sont ressortis du plan de fente (11), caractérisé en ce que le bois profile (12) est courbé de manière qu'après sortie des éléments enlevant des copeaux, il soit toujours écarté de la lame de scie circulaire (15), un élément de sectionnement (26), servant à courber, étant prévu à cet effet à proximité immédiate, à côté de la lame de scie circulaire (15) et présentant une surface (27) qui, à proximité de l'axe (14) de la lame de soie, est écartée de la lame de scie circulaire (15) et qui s'étend, à proximité des dents (16) de la lame de scie, à peu près tangentiellement à un bord (23) continu, formé par les dents (16) de la lame de scie.

2. Procédé selon la revendication 1, caractérisé en ce que le produit de coupe (10) est courbé (28b, 28b') des deux côtés de l'outil.

3. Procédé selon la revendication 1 ou 2, caractérisé en ce que l'outil est refroidi pendant le sectionnement, en particulier dans la zone des éléments enlevant des copeaux, au moyen d'un dispositif de refroidissement monté sur l'élément de sectionnement (26).

4. Procédé selon une ou plusieurs des revendications 1 à 3, caractérisé en ce que l'élément de sectionnement (26) est maintenu fixe dans l'espace.

5. Procédé selon une ou plusieurs des revendications 1 à 3, caractérisé en ce que l'élément de sectionnement (26) est déplaçable par rapport à l'outil.

6. Procédé selon la revendication 5, caractérisé en ce que l'élément de sectionnement (26) est mis en vibration.

7. Procédé selon une ou plusieurs des revendications 1 à 6, caractérisé en ce qu'une force est exercée sur le produit de coupe (10), essentiellement perpendiculairement au plan (11) de la fente, au moyen d'un premier dispositif de pression (35), directement devant ou derrière les éléments enlevant des copeaux, se trouvant en prise.

8. Procédé selon une ou plusieurs des revendications 1 à 7, caractérisé en ce que dans le cas où il n'est prévu qu'un élément de sectionnement (26), sur un côté du plan (11) de la fente, une force, essentiellement perpendiculaire au plan (11) de la fente, est exercée sur l'outil, sur l'autre côté, au moyen d'un second dispositif de pression (37).

9. Procédé selon une ou plusieurs des revendications 1 à 8, caractérisé en ce que l'outil est réglé dans sa position, par rapport à l'élément de sectionnement (26), au moyen d'un fluide s'écoulant sur l'outil.

10. Dispositif destiné à sectionner ou à fendre un produit de coupe (10) rigide, en particulier du bois, présentant un module d'élasticité compris de préférence entre 50 000 et 400 000 kg/cm² environ, pour lequel un outil étroit, comportant des éléments enlevant des copeaux, en particulier une lame de soie circulaire (15), pratique une fente (38), de largeur finie, dans le produit de coupe (10), à une vitesse de coupe supérieure à 40 m/s environ, et un bois profilé (12) est courbé (28) par rapport au reste (13) du produit de coupe (10), une fois queles éléments enlevant des copeaux sont ressortis du plan de fente (11), caractérisé en ce que le bois profilé (12) est courbé de manière qu'après sortie des éléments enlevant des copeaux, il soit toujours écarté de la lame de scie circulaire (15), un élément de sectionnement (26), servant à courber, étant prévu à cet effet à proximité immédiate, à côté de la lame de scie circulaire (15) et présentant une surface (27) qui, à proximité de l'axe (14) de la lame de scie, est écartée de la lame de soie circulaire (15) et qui s'étend, à proximité des dents (16) de la lame de scie, à peu près tangentiellement à un bord (23) continu, formé par les dents (16) de la lame de scie.

11. Dispositif selon la revendication 10, caractérisé en ce que l'élément de sectionnement (26) présente un canal (33) qui débouche dans la cavité (34), entre l'élément de sectionnement (26) et la lame de scie circulaire (15), la cavité (34a') étant de préférence partagée par une cloison (46) radiale, qui présente un passage dans la zone (47) des dents (16).

12. Dispositif selon les revendications 10 ou 11, caractérisé en ce que des éléments de sectionnement (26b, 26b') sont placés des deux côtés de la lame de scie circulaire (15).

13. Dispositif selon une ou plusieurs des revendications 10 à 12, caractérisé en ce que la lame de scie circulaire (15) est épaissie (18) vers l'axe (10).

14. Dispositif selon une ou plusieurs des revendications 10 à 13, caractérisé en ce qu'un premier dispositif de pression (35), agissant en direction de l'axe (14), est prévu pour le produit de coupe (10), sur le pourtour de la lame de scie circulaire (15), ou à l'extérieur de celui-ci.

15. Dispositif selon l'une des revendications 10 à 14, caractérisé en ce que dans le cas où il n'est prévu qu'un seul élément de sectionnement (26), sur un côté de la lame de scie circulaire (15), il est prévu sur l'autre côté de la lame de soie circulaire (15), un second dispositif de pression (37) pour la lame de scie circulaire (15), agissant en direction de l'axe (14).

16. Dispositif selon l'une des revendications 14 ou 15, caractérisé en ce que le dispositif de pression (35a) présente une barre de pression (59), qui repose avec une surface d'appui (61) en forme d'arc de cercle, sur le produit de coupe (10), la surface d'appui (61) s'étendant de préférence sur un angle périphérique, qui coïncide pratiquement avec la zone d'engagement des éléments enlevant des copeaux sur le produit de coupe (10), et en particulier la surface d'appui (61) est plane et se prolonge par un chanfrein d'entrée (60), dans le sens contraire au sens d'entrée (62) du produit de coupe (10).

17. Dispositif selon la revendication 16, caractérisé en ce que la surface profilée (27') de l'élément de sectionnement (26) est conçue suivant une courbe de flexion mathématique, en particulier la courbe de flexion sur un bois profilé (12) en pin/sapin ou en chêne/hêtre de 24 mm d'épaisseur ou plus.
